# EUROPÄISCHE PATENTSCHRIFT

(11) **EP 1 777 426 B1**
(45) Veröffentlichungstag und Bekanntmachung des Hinweises auf die Patenterteilung: **08.10.2008**
(21) Anmeldenummer: 05109805.1
(22) Anmeldetag: 20.10.2005
(51) Int. Cl.: F16D 25/12, F16D 25/10, H02K 7/00, F16D 21/06

(54) **Doppelkupplung**
Double clutch
Embrayage double

(43) Veröffentlichungstag der Anmeldung: 25.04.2007
(73) Patentinhaber: Getrag Ford Transmissions GmbH, 50735 Köln (DE)
(72) Erfinder: Enström, Hans, 44331 Lerum (SE)

(56) Entgegenhaltungen:
- EP-A- 1 195 537
- DE-A1- 10 049 955
- FR-A- 2 814 516

## Beschreibung

Die Erfindung betrifft eine Doppelkupplung für ein Getriebe mit einer ersten Getriebeeingangswelle und einer zur ersten Getriebewelle koaxial angeordneten zweiten Getriebeeingangswelle.

Eine derartige Doppelkupplung ist beispielsweise in der EP 1 195 537 B1 beschrieben. Die Doppelkupplung weist dabei einen Kupplungsflansch auf, der mit einem Antrieb oder Motor drehfest verbunden werden kann. Des weiteren weist die Doppelkupplung eine erste Kupplung und eine zweite Kupplung auf. Es handelt sich bei den beiden Kupplungen um hydraulisch betätigbare Kupplungen. Befindet sie sich zum Beispiel die erste Kupplung in einer geschlossenen Stellung, lässt sich sie ein Drehmoment von dem Kupplungsflansch auf die erste Getriebeeingangswelle übertragen. Entsprechend dient die zweite Kupplung dazu, einen Drehmoment von dem Kupplungsflansch auf die zweite Getriebeeingangswelle zu übertragen.

Jede der beiden Kupplungen weist mehrere Außenlamellen und mehrere Innenlamellen auf. Über eine Kupplungsnabe mit einem Innenlamellenträger und über ein drehbares Kupplungsgehäuse mit Kupplungsdeckel sind die jeweiligen Innenlamellen der ersten und zweiten Kupplung drehfest mit dem Kupplungsflansch verbunden. Die Außenlamellen der ersten Kupplung sind über eine erste Kupplungsglocke drehfest mit der ersten Getriebeeingangswelle verbunden, während die Außenlamellen der zweiten Kupplung drehfest über eine zweite Kupplungsglocke mit der zweiten Getriebeeingangswelle verbunden sind.

Die Kupplungsnabe umfasst neben dem Innenlamellenträger auch eine erste hydraulische Einheit zur Betätigung der ersten Kupplung und eine zweite hydraulische Einheit zur Betätigung der zweiten Kupplung. Dabei kann die erste hydraulische Einheit einen axial gerichteten Druck auf die abwechselnd nebeneinander angeordneten Innenlamellen und Außenlamellen ausüben, wobei Innen- und Außenlamellen in axialer Richtung aufeinander gepresst werden. Aufgrund der Reibung zwischen den einzelnen Lammellen kann dann die erste Kupplung ein Reibdrehmoment übertragen kann. In identischer Weise lässt sich durch die zweite hydraulische Einheit die zweite Kupplung betätigen, um im geschlossenen Zustand ein Drehmoment von der Kupplungsnabe auf die zweite Getriebeeingangswelle zu übertragen.

Die Kupplungsnabe stützt sich drehbar gelagert an einer Kupplungsachse ab, die koaxial zur ersten Getriebeeingangswelle und zweiten Getriebeeingangswelle angeordnet ist. Die Kupplungsachse dient dabei nicht nur der drehbaren Lagerung der Kupplungsnabe, sondern auch zur Versorgung der Kupplungsnabe mit Öl. So benötigen die erste und zweite hydraulische Einheit Drucköl, um die jeweiligen Lamellenpakete zusammendrücken zu können. Des weiteren wird über die Kupplungsachse der ersten und zweiten Kupplung Kühlöl zugeführt, um Wärme bei einem Schlupfbetrieb der ersten und zweiten Kupplung abführen zu können.

Das drehbare Kupplungsgehäuse mit dem Kupplungsdeckel bildet einen geschlossenen Kupplungstopf, in dem die erste und zweite Kupplung sowie die entsprechenden Kupplungsglocken angeordnet sind. Aufgrund der nahezu vollständigen Umschließung durch das sich mit dem Kupplungsflansch und somit mit dem Motor drehenden Kupplungsgehäuse lässt sich keine drehfeste Verbindung zwischen einem beispielsweise radial außen an dem Kupplungsgehäuse anliegenden Hilfsantrieb und der ersten oder zweiten Kupplungsglocke herstellen. Es besteht hingegen nur die Möglichkeit, den radial außen anliegenden Hilfsantrieb beispielsweise in Form eines Elektromotors mit dem drehbaren Kupplungsgehäuse zu koppeln. Eine Kopplung mit einer Ausgangsseite der ersten oder zweiten Kupplung, sprich mit der ersten oder zweiten Kupplungsglocke, ist jedoch nicht oder kaum realisierbar.

Gegebenenfalls ließe sich an der ersten oder äußeren Kupplungsglocke ein Läufer oder Rotor des Elektromotors drehfest befestigen, wobei der Läufer innerhalb des Kupplungsgehäuses angeordnet ist. Ein Stator des entsprechenden Elektromotors wäre dann außerhalb des Kupplungsgehäuses anzuordnen. Dies bedeutet, dass Stator und Rotor durch die Wandung des Kupplungsgehäuses voneinander getrennt wären. Bei entsprechender Auswahl des Materials für das Kupplungsgehäuse sowie bei entsprechender Dimensionierung des radialen Abstands zwischen Läufer und Rotor könnte somit ein gewünschtes Drehmoment des Elektromotors auf die erste Kupplungsglocke und so auf die erste Getriebeeingangswelle übertragen werden. Jedoch führt dies zu einem vergleichsweise aufwendigen Aufbau des Elektromotors.

Der Erfindung liegt daher die Aufgabe zugrunde, eine Doppelkupplung bereitzustellen, die hinsichtlich der drehfesten Anbindung von Kupplungsflansch zu der ersten oder zweiten Kupplung bzw. von der ersten oder zweiten Kupplung zu der ersten oder zweiten Getriebeeingangswelle möglichst viele Freiheitsgrade offen lässt. Insbesondere soll die bereitzustellende Doppelkupplung eine einfache Anbindung eines Elektromotors gestatten.

Die der Erfindung zugrunde liegende Aufgabe wird mit einer Doppelkupplung gemäß Anspruch 1 gelöst. Bevorzugte Ausführungsformen der erfindungsgemäßen Doppelkupplung können den Unteransprüchen entnommen werden.

Die erfindungsgemäße Doppelkupplung zeichnet sich dadurch aus, dass ein Kupplungsteil zur Übertragung von Drehmoment einen hohlzylindrischen Abschnitt aufweist, der in axialer Richtung gesehen zwischen Kupplungsachse und Kupplungsnabe jeweils drehbar dazu angeordnet ist und wenigstens einen Durchtritt aufweist, durch den Öl von der Kupplungsachse zur Kupplungsnabe geleitet werden kann. Das Kupplungsteil kann dabei zur drehfesten Verbindung des Kupplungsflansches mit einer Eingangsseite der ersten und zweiten Kupplung oder zur drehfesten Verbindung einer Ausgangsseite der ersten Kupplung mit der ersten Getriebeeingangswelle dienen.

Durch das Kupplungsteil bedingt stützt sich somit die Kupplungsnabe nicht unmittelbar auf der feststehenden Kupplungsachse ab. Dazwischen ist der hohlzylindrische Abschnitt angeordnet, der sich bezogen auf Kupplungsachse und Kupplungsnabe jeweils mit unterschiedlicher Drehzahl drehen kann. Durch geeignete Lagerung zwischen Kupplungsnabe und Kupplungsteil einerseits und zwischen Kupplungsteil und Kupplungsachse andererseits ist weiterhin eine gute radiale Abstützung der Kupplungsnabe gewährleistet, die üblicherweise über eine große rotierende Masse verfügt.

Der wenigstens eine Durchtritt sorgt dafür, dass die erste und zweite hydraulische Einheit über die Kupplungsachse mit Öl versorgt werden kann. Dabei gelangt das Öl von einem Öldrucksystem in die Kupplungsachse, von dort aus in den Durchtritt des hohlzylindrischen Abschnitts des Kupplungsteils und von da aus zur Kupplungsnabe, die mittels geeigneter Zuleitungen das Öl an die erste und/oder zweite hydraulische Einheit führt.

In einem bevorzugten Ausführungsbeispiel ist ein Elektromotor vorgesehen, der in radialer Richtung gesehen die erste und zweite Kupplung umgreift sowie einen ringförmigen Stator und einen ringförmigen Rotor aufweist. Dabei kann der Rotor drehfest mit dem Kupplungsteil verbunden sein. Das Drehmoment des Elektromotors kann unabhängig von einer geöffneten oder geschlossenen ersten Kupplung auf das Kupplungsteil übertragen werden. Dient das Kupplungsteil zur Übertragung von Drehmoment bei geöffneter erster Kupplung auf die erste Getriebeeingangsseite, lässt sich somit das durch den Elektromotor bereitgestellte Drehmoment die erste Getriebeeingangswelle unabhängig von dem am Kupplungsflansch hängenden Motor antreiben. So ließe sich beispielsweise die Drehzahl der ersten Getriebeeingangswelle mit der Drehzahl des Motors synchronisieren, so dass für die erste Kupplung auch eine Klauenkupplung grundsätzlich eingesetzt werden könnte. Anstelle des Läufers des Elektromotors kann das Kupplungsteil mit einem anderen Hilfsantrieb gekoppelt sein, so dass Drehmoment von dem Hilfsantrieb über das Kupplungsteil auf die erste Getriebeeingangswelle geleitet werden kann. Die Anordnung des Hilfsantriebs ist dabei nicht auf die radial außen liegende Anordnung beschränkt, wie sie im Falle des Elektromotors oben beschrieben. Ferner kann ein weiterer Hilfsantrieb (Elektromotor) mit der zweiten Getriebeeingangswelle drehfest verbunden sein. Aus Platzgründen kann ein zweiter Hilfsantrieb auch fern der Doppelkupplung untergebracht sein.

Vorzugsweise weist das Kupplungsteil einen tellerförmigen Abschnitt auf, der den Rotor oder Läufer des Elektromotors mit dem hohlzylindrischen Abschnitt verbindet. Der tellerförmige Abschnitt überbrückt dabei den radialen Abstand zwischen Rotor und dem hohlzylindrischen Abschnitt. Vorzugsweise erstreckt sich dabei der tellerförmige Abschnitt an einer motorabgewandten Seite der Doppelkupplung.

In einem bevorzugten Ausführungsbeispiel sind die Kupplungsnabe und der Kupplungsflansch drehfest miteinander verbunden, wobei die Kupplungsnabe eingangsseitige Reibscheiben der ersten und zweiten Kupplung drehfest trägt. Somit drehen sich die eingangsseitigen (motorseitigen) Reibscheiben der ersten und zweiten Kupplung in Einbaulage der Doppelkupplung mit gleicher Drehzahl wie der dann angeschlossene Motor. Ausgangsseitige (getriebeseitige) Reibscheiben der ersten Kupplung können dabei drehfest mit dem Kupplungsteil verbunden sein.

Ausgangsseitige Reibscheiben der zweiten Kupplung können über eine Kupplungsglocke mit der zweiten Getriebeeingangswelle verbunden sein. Die Kupplungsglocke weist dabei einen Glockenboden auf, der sich an einer motorzugewandten Seite der Doppelkupplung befindet.

An einem motorseitigen Ende des hülsenförmigen Abschnitts kann sich ein Ring anschließen, der eine drehfeste Verbindung zwischen Kupplungsteil und erster Getriebeeingangswelle schafft. Der Ring umgreift dabei das motorseitige Ende der feststehenden Kupplungsachse, die zwischen dem hohlzylindrischen Abschnitt und der ersten Getriebeeingangswelle angeordnet ist.

Der hohlzylindrische Abschnitt kann gegenüber der Kupplungsnabe mittels wenigstens eines an einer Außenseite des hohlzylindrischen Abschnittes anliegenden Wälzlagers drehbar gelagert sein. Vorzugsweise werden dabei zwei axial voneinander beabstandete Zylinderrollenlager verwendet, die die auf die Kupplungsnabe wirkenden Kräfte auf den hohlzylindrischen Abschnitt leiten.

Der hohlzylindrische Abschnitt wiederum kann sich über wenigstens ein Wälzlager, das an der Innenseite des hohlzylindrischen Abschnitts angeordnet ist, drehbar gelagert an der feststehenden Kupplungsnabe abstützen. Auch hier können zwei in axialer Richtung zueinander beabstandete Zylinderrollenlager Anwendung finden.

Der hohlzylindrische Abschnitt kann eine erste Gruppe von Durchtritten aufweisen, durch die Öl von der Kupplungsachse über wenigstens einen Kanal in der Kupplungsnabe zur ersten hydraulischen Einheit geleitet werden kann. Davon hydraulisch getrennt kann der hohlzylindrische Abschnitt eine zweite Gruppe von Durchtritten aufweisen, durch die Öl von der Kupplungsachse zur Kühlung der ersten und/oder zweiten Kupplung geleitet werden kann. Dabei kann vorgesehen sein, dass die erste und die zweite Kupplung voneinander getrennt und unabhängig mit einem Kühlölstrom beaufschlagt werden können. Auch kann der hohlzylindrische Abschnitt eine dritte Gruppe von Durchtritten aufweisen, durch die Öl von der Kupplungsachse über wenigstens einen weiteren Kanal zur zweiten hydraulischen Einheit geleitet werden kann. Somit leitet der hohlzylindrische Abschnitt des Kupplungsteiles, jeweils voneinander hydraulisch getrennt, verschiedene Drücke von der Kupplungsachse auf die Kupplungsnabe durch.

Der wenigstens eine Durchtritt kann als Bohrung im hohlzylindrischen Abschnitt ausgebildet sein, wobei die Bohrung vorzugsweise an der Innenseite des hohlzylindrischen Abschnitts mit einer Ringnut der Kupplungsachse und an der Außenseite des hohlzylindrischen Abschnitts mit einer Ringnut der Kupplungsnabe in Verbindung steht. Trotz relativer Drehbewegung zwischen Kupplungsachse und hohlzylindrischem Abschnitt einerseits und hohlzylindrischem Abschnitt und Kupplungsnabe andererseits lässt sich dadurch Öl von der feststehenden Kupplungsnabe zur rotierenden Kupplungsnabe transportieren.

Anhand der Zeichnung wird die Erfindung näher erläutert. Es zeigen:
- Figur 1: eine schematische Darstellung einer Doppelkupplung; und
- Figur 2: eine Doppelkupplung im Längsschnitt.

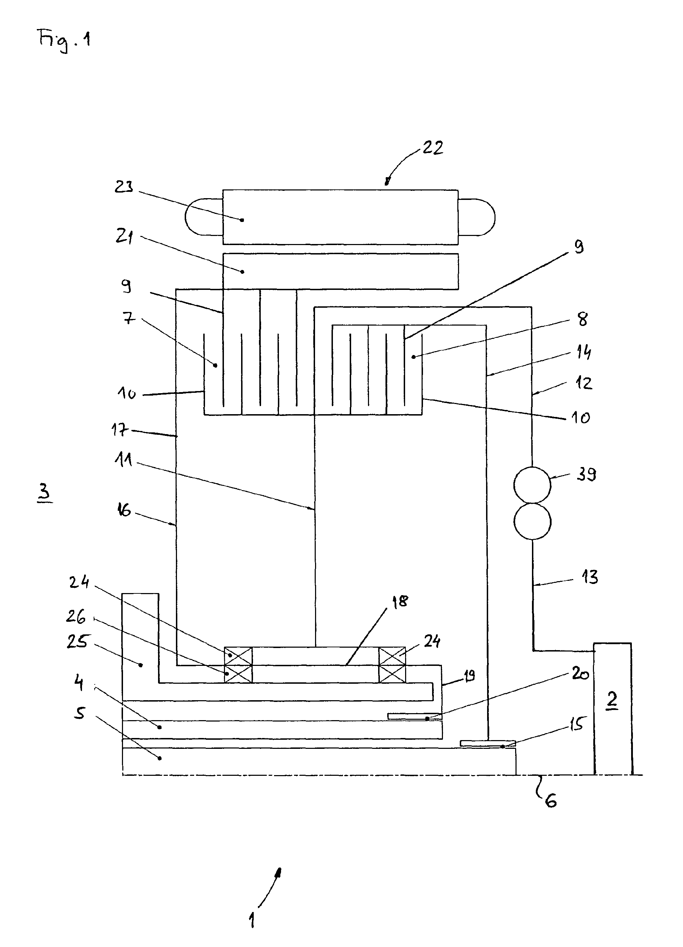

Figur 1 zeigt schematisch eine Doppelkupplung, die in ihrer Gesamtheit mit 1 bezeichnet wird. Die Doppelkupplung 1 ist in Einbaulage zwischen einem hier nur stark schematisierten Motor 2 und einem nicht weiter dargestellten Getriebe 3 angeordnet. Von dem Getriebe 3 sind lediglich eine erste Getriebeeingangswelle 4 und eine zweite Getriebeeingangswelle 5 dargestellt. Die erste und die zweite Getriebeeingangswelle 4, 5 sind zueinander koaxial angeordnet, wobei die erste Getriebeeingangswelle 4 als Hohlwelle ausgebildet ist. Die erste und die zweite Getriebeeingangswelle 4, 5 nkönnen sich um eine Achse 6 drehen.

Die Doppelkupplung 1 umfasst eine erste Kupplung 7 und eine zweite Kupplung 8. Die Kupplungen 7, 8 bestehen dabei jeweils aus mehreren Außenlamellen 9 und mehreren Innenlamellen 10. In einer geschlossenen Stellung beispielsweise der ersten Kupplung 7 entsteht ein Reibschluss zwischen den Außenlamellen 9 und den Innenlamellen 10, sodass zwischen den Lamellen 9, 10 ein Drehmoment übertragen werden kann. Analog gilt dies auch für die zweite Kupplung 8. Die Innenlamellen 10 der ersten und der zweiten Kupplung sind über eine um die Achse 6 drehbar gelagerte Kupplungsnabe 11 und über einen Kupplungstopf 12 drehfest mit dem Motor 2 verbunden. Zwischen einem Kupplungsflansch 13, an dem sich drehfest der Motor 2 anflanschen lässt und dem Kupplungstopf 12 ist ein Torsionsschwingungsdämpfer 38 vorgesehen, um die einzelnen Bauteile der Doppelkupplung 1 vor den Schwingungen des als Verbrennungskraftmaschine ausgeführten Motors 2 zu entkoppeln. Die Außenlamellen 9 der zweiten Kupplung 8 sind über eine Kupplungsglocke 14 mit der zweiten Getriebeeingangswelle drehfest verbunden. Die Drehung der Kupplungsglocke 14 wird dabei über ein Zahnprofil 15 auf die zweite Getriebeeingangswelle 5 übertragen.

Die Außenlamellen 9 der ersten Kupplung 7 sind drehfest mit einem Kupplungsteil zur Übertragung von Drehmoment verbunden, das mit dem Bezugszeichen 16 versehen ist. Das Kupplungsteil 16 weist einen tellerförmigen Abschnitt 17 und einen hohlzylindrischen Abschnitt 18 auf. Befindet sich die erste Kupplung 7 in geschlossener Stellung, wird das Drehmoment des Motors 2 auf die Außenlamellen 9 der ersten Kupplung 7 übertragen, von wo aus es über den tellerförmigen Abschnitt 17 über den hohlzylindrischen Abschnitt 18 auf die erste Getriebeeingangswelle 4 geleitet wird. Zur Übertragung des Drehmomentes von dem hohlzylindrischen Abschnitt 18 auf die erste Getriebeeingangswelle 4 ist ein Ring 19 vorgesehen, der sowohl drehfest mit dem hohlzylindrischen Abschnitt 18 als auch über ein Zahn-/Keilwellenprofil 20 mit der ersten Getriebeeingangswelle 4 verbunden ist.

Das Kupplungsteil 16 trägt drehfest einen Läufer 21 eines Elektromotors 22. Neben dem Läufer 21 besteht der Elektromotor 22 im wesentlichen aus einem Stator 23. Läufer 21 und Stator 23 sind ringförmig ausgebildet und umgreifen in radialer Richtung die beiden Kupplungen 7, 8 und auch die Kupplungsnabe 11. Ein von dem Elektromotor 22 erzeugtes Drehmoment wird über das Kupplungsteil 16 zur ersten Getriebeeingangswelle 4 geleitet.

Die Kupplungsnabe 11 stützt sich in radialer Richtung auf dem hohlzylindrischen Abschnitt 18 des Kupplungsteils 16 ab. Zwischen Kupplungsnabe 11 und hohlzylindrischem Abschnitt 18 sind dabei Lager 24 vorgesehen, so dass Kupplungsnabe 11 und Kupplungsteil 16 mit unterschiedlichen Drehzahlen um die Achse 6 rotieren können. Das Kupplungsteil 16 mit dem hohlzylindrischen Abschnitt 18 wiederum stützt sich an einer feststehenden Kupplungsachse 25 ab. Lager 26 sorgen dafür, dass die auf das Kupplungsteil 16 wirkenden Kräfte auf die Kupplungsachse 25 weitergeleitet werden, wobei die Lager 26 eine Drehung des Kupplungsteils 16 um die Achse 6 erlauben.

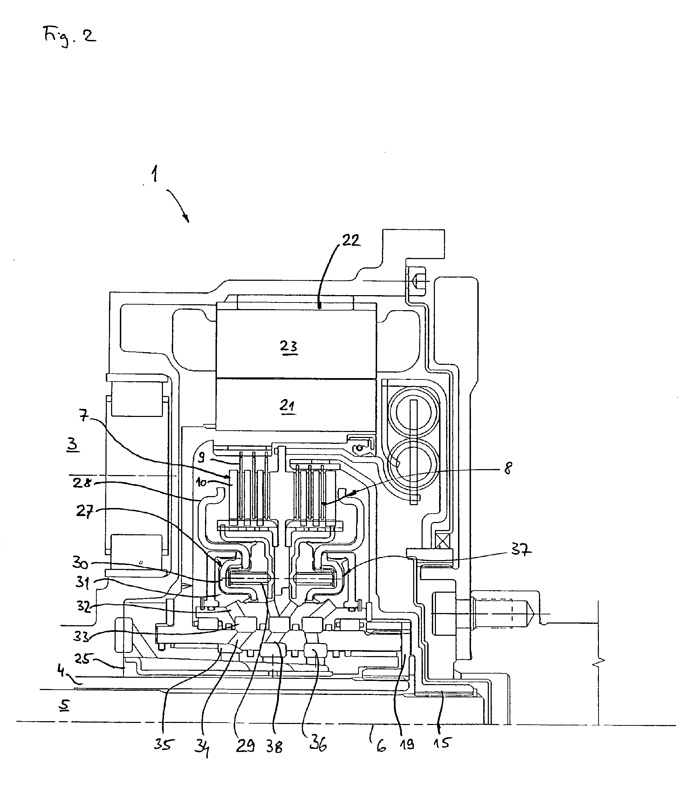

Figur 2 zeigt ein über das Schema der Figur hinausgehendes Ausführungsbeispiel für die erfindungsgemäße Doppelkupplung 1. Bauteile, die den in der Figur 1 dargestellten Bauteilen entsprechen, werden mit den gleichen Bezugszeichen wie in Figur 1 belegt. Aus der Figur 2 wird insbesondere deutlich, dass die feststehende Kupplungsachse 25 neben der Lagerung der Kupplungsnabe 11 bzw. des Kupplungsteils 16 auch die Aufgabe erfüllt, die Doppelkupplung 1 mit Drucköl bzw. Kühlöl zu versorgen.

Der ersten Kupplung 7 ist eine erste hydraulische Einheit 27 zugeordnet, durch die die Außenlamellen 9 und die Innenlamellen 10 mittels eines Anpressrings 28 aneinander gedrückt werden können. Die hydraulische Einheit 27 umfasst dabei einen gegen die Kraft einer Feder 29 verfahrbaren Kolben 30. Um die Außenlamellen 9 und die Innenlamellen 10 zusammenzudrücken und somit die erste Kupplung 7 zu schließen, wird Öl in einen Arbeitsraum 31 gepresst. Das Öl wird dabei durch einen Kanal 32 in den Arbeitsraum 31 geleitet. Der Kanal 32 verbindet den Arbeitsraum 31 mit einer ringförmigen Nut 33 in der Kupplungsnabe 11. Eine schräg geführte Bohrung 34 in dem hohlzylindrischen Abschnitt 18 des Kupplungsteils 16 stellt eine hydraulische Verbindung zwischen der Ringnut 33 und einer Ringnut 35 her, die zumindest teilweise durch eine entsprechende ringförmige Zurückstellung in der Kupplungsnabe 25 ausgebildet ist. Durch die Aneinanderreihung der diversen Ringnuten und der diversen Kanäle bzw. Bohrungen lässt sich somit ausgehend von der feststehenden Kupplungsachse 25 der um die Achse 6 rotierende Arbeitsraum 31 mit Drucköl beaufschlagen, obgleich zwischen Arbeitsraum 31 bzw. Kupplungsnabe 11 und der feststehenden Kupplungsachse 25 sich der hohlzylindrische Abschnitt 18 befindet, der mit einer anderen Drehzahl um die Achse 6 rotieren kann wie die Kupplungsnabe 11.

In Analogie zu der Anordnung von Ringnuten und Kanälen weist die Doppelkupplung 1 auch eine hydraulische Verbindung 36 zur Versorgung einer zweiten hydraulischen Einheit 37 auf. Die zweite hydraulische Einheit 37 ist der zweiten Kupplung 8 zugeordnet und dient, in analoger Weise wie die erste hydraulische Einheit 27, der Betätigung der zweiten Kupplung 8.

Des weiteren weist die Doppelkupplung 1 eine hydraulische Verbindung 38 zwischen Kupplungsachse 25 und Kupplungsnabe 11 auf, um die erste Kupplung 7 und die zweite Kupplung 8 mit Kühlöl zu versorgen. Die hydraulischen Verbindungen 36, 38 und die oben detailliert beschriebene Verbindung zwischen Kupplungsachse 25 und Arbeitsraum 31 sind jeweils voneinander hydraulisch getrennt. Somit lassen sich die Kupplungen 7, 8 und auch der Kühlölstrom voneinander unabhängig regeln.

### Bezugszeichenliste

- 1: Doppelkupplung
- 2: Motor
- 3: Getriebe
- 4: erste Getriebeeingangswelle
- 5: zweite Getriebeeingangswelle
- 6: Achse
- 7: erste Kupplung
- 8: zweite Kupplung
- 9: Außenlamelle
- 10: Innenlamelle
- 11: Kupplungsnabe
- 12: Kupplungstopf
- 13: Kupplungsflansch
- 14: Kupplungsglocke
- 15: Zahn-/Keilwellenprofil
- 16: Kupplungsteil
- 17: tellerförmiger Abschnitt
- 18: hohlzylindrischer Abschnitt
- 19: Ring
- 20: Zahn-/Keilwellenprofil
- 21: Läufer
- 22: Elektromotor
- 23: Stator
- 24: Lager
- 25: Kupplungsachse
- 26: Lager
- 27: erste hydraulische Einheit
- 28: Anpressring
- 29: Feder
- 30: Kolben
- 31: Arbeitsraum
- 32: Kanal
- 33: Ringnut
- 34: Bohrung
- 35: Ringnut
- 36: hydraulische Verbindung
- 37: zweite hydraulische Einheit
- 38: hydraulische Verbindung
- 39: Torsionsschwingungsdämpfer

## Patentansprüche

1. Doppelkupplung (1) für ein Getriebe (3) mit einer ersten Getriebeeingangswelle (4) und einer zur ersten Getriebeeingangswelle (4) koaxial angeordneten zweiten Getriebeeingangswelle (5), umfassend
- einen Kupplungsflansch (13), der mit einem Motor (2) drehfest verbindbar ist,
- eine erste Kupplung (7), durch die der Kupplungsflansch (13) mit der ersten Getriebeeingangswelle (4) drehfest verbindbar ist,
- eine zweite Kupplung (8), durch die der Kupplungsflansch (13) mit der zweiten Getriebeeingangswelle (5) drehfest verbindbar ist,
- eine zu den Getriebeeingangswellen (4, 5) koaxial angeordnete Kupplungsnabe (11), die eine erste hydraulische Einheit (27) zur Betätigung der ersten Kupplung (7) und eine zweite hydraulische Einheit (37) zur Betätigung der zweiten Kupplung (8) umfasst,
- eine Kupplungsachse (25), auf die sich die Kupplungsnabe (11) drehbar gelagert abstützt und die mit der Kupplungsnabe (11) hydraulisch verbunden ist, um Öl von der Kupplungsachse (25) zur Kupplungsnabe (11) zu leiten,
**dadurch gekennzeichnet, dass** ein Kupplungsteil (16) zur Übertragung von Drehmoment einen hohlzylindrischen Abschnitt (18) aufweist, der in radialer Richtung gesehen zwischen Kupplungsachse (25) und Kupplungsnabe (11) jeweils drehbar dazu angeordnet ist und wenigstens einen Durchtritt aufweist, durch den Öl von der Kupplungsachse zur Kupplungsnabe leitbar ist.

2. Doppelkupplung (1) nach Anspruch 1, **dadurch gekennzeichnet, dass** ein Elektromotor (22) vorgesehen ist, der in radialer Richtung gesehen die erste und zweite Kupplung (7, 8) zumindest teilweise umgreift und einen ringförmigen Stator (23) und einen ringförmigen Rotor oder Läufer (21) aufweist.

3. Doppelkupplung (1) nach Anspruch 2, **dadurch gekennzeichnet, dass** der Rotor (21) drehfest mit dem Kupplungsteil (16) verbunden ist.

4. Doppelkupplung (1) nach Anspruch 3, **dadurch gekennzeichnet, dass** das Kupplungsteil (16) einen tellerförmigen Abschnitt (17) aufweist, der den Rotor (21) mit dem hohlzylindrischen Abschnitt (18) verbindet.

5. Doppelkupplung (1) nach einem der Ansprüche 1 bis 4, **dadurch gekennzeichnet, dass** Kupplungsnabe (11) und Kupplungsflansch (13) drehfest miteinander verbunden sind, wobei die Kupplungsnabe (11) eingangsseitige Reibscheiben der ersten und zweiten Kupplung (7, 8) trägt.

6. Doppelkupplung (1) nach Anspruch 5, **dadurch gekennzeichnet, dass** ausgangsseitige Reibscheiben der ersten Kupplung (7) drehfest mit dem Kupplungsteil (17) verbunden sind.

7. Doppelkupplung (1) nach Anspruch 5 oder 6, **dadurch gekennzeichnet, dass** ausgangsseitige Reibscheiben der zweiten Kupplung (8) über eine Kupplungsglocke (14) mit der zweiten Getriebeeingangswelle (5) verbunden sind.

8. Doppelkupplung (1) nach einem der Ansprüche 1 bis 7, **dadurch gekennzeichnet, dass** sich an einem motorseitigen Ende des hohlzylindrischen Abschnitts (18) ein Ring (19) anschließt, der eine drehfeste Verbindung zwischen Kupplungsteil (16) und erster Getriebeeingangswelle (4) schafft.

9. Doppelkupplung (1) nach einem der Ansprüche 1 bis 8, **dadurch gekennzeichnet, dass** der hohlzylindrische Abschnitt (18) gegenüber der Kupplungsnabe (11) mittels wenigstens eines an einer Außenseite des hohlzylindrischen Abschnitts (18) anliegenden Wälzlagers oder Gleitlagers drehbar gelagert ist.

10. Doppelkupplung (1) nach einem der Ansprüche 1 bis 9, **dadurch gekennzeichnet, dass** der hohlzylindrische Abschnitt (18) gegenüber der Kupplungsachse (25) mittels wenigstens eines an einer Innenseite des hohlzylindrischen Abschnitts anliegenden Wälzlagers oder Gleitlagers drehbar gelagert ist.

11. Doppelkupplung (1) nach einem der Ansprüche 1 bis 10, **dadurch gekennzeichnet, dass** der hohlzylindrische Abschnitt (18) eine erste Gruppe von Durchtritten ausweist, durch die Öl von der Kupplungsachse (25) über einen Kanal (32) zur ersten hydraulischen Einheit (27) leitbar ist.

12. Doppelkupplung (1) nach Anspruch 11, **dadurch gekennzeichnet, dass** der hohlzylindrische Abschnitt (18) eine zweite Gruppe von Durchtritten ausweist, durch die Öl von der Kupplungsachse (25) zur Kühlung der ersten und/oder zweiten Kupplung (7, 8) leitbar ist.

13. Doppelkupplung (1) nach Anspruch 11 oder 12, **dadurch gekennzeichnet, dass** der hohlzylindrische Abschnitt (18) eine dritte Gruppe von Durchtritten ausweist, durch die Öl von der Kupplungsachse (25) zur zweiten hydraulischen Einheit (37) leitbar ist.

14. Doppelkupplung (1) nach einem der Ansprüche 1 bis 13, **dadurch gekennzeichnet, dass** der wenigstens eine Durchtritt als Bohrung im hohlzylindrischen Abschnitt (18) ausgebildet ist, wobei die Bohrung (34) an der Innenseite des hohlzylindrischen Abschnitts (18) mit einer Ringnut der Kupplungsachse (25) und an der Außenseite des hohlzylindrischen Abschnitts mit einer Ringnut der Kupplungsnabe (11) in Verbindung steht.

## Claims

1. Dual clutch (1) for a transmission (3), having a first transmission input shaft (4) and having a second transmission input shaft (5) which is arranged coaxially with respect to the first transmission input shaft (4), comprising
- a clutch flange (13) which can be rotationally fixedly connected to an engine (2),
- a first clutch (7), by means of which the clutch flange (13) can be rotationally fixedly connected to the first transmission input shaft (4),
- a second clutch (8), by means of which the clutch flange (13) can be rotationally fixedly connected to the second transmission input shaft (5),
- a clutch hub (11) which is arranged coaxially with respect to the transmission input shafts (4, 5) and which comprises a first hydraulic unit (27) for actuating the first clutch (7) and a second hydraulic unit (37) for actuating the second clutch (8),
- a clutch axle (25) on which the clutch hub (11) is supported in a rotatably mounted manner and which is hydraulically connected to the clutch hub (11) in order to conduct oil from the clutch axle (25) to the clutch hub (11),
**characterized in that** a clutch part (16) has a hollow cylindrical section (18) for transmitting torque, which hollow cylindrical section (18) is arranged, as viewed in the radial direction, between the clutch axle (25) and clutch hub (11) so as to be rotatable with respect to each of these, and which hollow cylindrical section (18) has at least one passage through which oil can be conducted from the clutch axle to the clutch hub.

2. Dual clutch (1) according to Claim 1, **characterized in that** an electric motor (22) is provided, which electric motor (22), as viewed in the radial direction, at least partially engages around the first and second clutch (7, 8) and has an annular stator (23) and an annular rotor (21).

3. Dual clutch (1) according to Claim 2, **characterized in that** the rotor (21) is rotationally fixedly connected to the clutch part (16).

4. Dual clutch (1) according to Claim 3, **characterized in that** the clutch part (16) has a plate-shaped section (17) which connects the rotor (21) to the hollow cylindrical section (18).

5. Dual clutch (1) according to one of Claims 1 to 4, **characterized in that** the clutch hub (11) and clutch flange (13) are rotationally fixedly connected to one another, with the clutch hub (11) supporting input-side friction discs of the first and second clutch (7, 8).

6. Dual clutch (1) according to Claim 5, **characterized in that** output-side friction discs of the first clutch (7) are rotationally fixedly connected to the clutch part (17).

7. Dual clutch (1) according to Claim 5 or 6, **characterized in that** output-side friction discs of the second clutch (8) are connected by means of a clutch bell (14) to the second transmission input shaft (5).

8. Dual clutch (1) according to one of Claims 1 to 7, **characterized in that** an engine-side end of the hollow cylindrical section (18) is adjoined by a ring (19) which creates a rotationally fixed connection between the clutch part (16) and the first transmission input shaft (4).

9. Dual clutch (1) according to one of Claims 1 to 8, **characterized in that** the hollow cylindrical section (18) is mounted so as to be rotatable with respect to the clutch hub (11) by means of at least one rolling bearing or plain bearing which bears against an outer side of the hollow cylindrical section (18).

10. Dual clutch (1) according to one of Claims 1 to 9, **characterized in that** the hollow cylindrical section (18) is mounted so as to be rotatable with respect to the clutch axle (25) by means of at least one rolling bearing or plain bearing which bears against an inner side of the hollow cylindrical section.

11. Dual clutch (1) according to one of Claims 1 to 10, **characterized in that** the hollow cylindrical section (18) has a first group of passages through which oil can be conducted from the clutch axle (25) via a duct (32) to the first hydraulic unit (27).

12. Dual clutch (1) according to Claim 11, **characterized in that** the hollow cylindrical section (18) has a second group of passages through which oil from the clutch axle (25) can be conducted to cool the first and/or second clutch (7, 8).

13. Dual clutch (1) according to Claim 11 or 12, **characterized in that** the hollow cylindrical section (18) has a third group of passages through which oil can be conducted from the clutch axle (25) to the second hydraulic unit (37).

14. Dual clutch (1) according to one of Claims 1 to 13, **characterized in that** the at least one passage is formed as a bore in the hollow cylindrical section (18), with the bore (34) being connected, at an inner side of the hollow cylindrical section (18), to an annular groove of the clutch axle (25), and at the outer side of the hollow cylindrical section, to an annular groove of the clutch hub (11).

## Revendications

1. Double embrayage (1) pour une boîte de vitesses (3), comprenant un premier arbre d'entrée de boîte de vitesses (4) et un deuxième arbre d'entrée de boîte de vitesses (5) disposé coaxialement au premier arbre d'entrée de boîte de vitesses (4), comprenant :
- une bride d'embrayage (13), qui peut être connectée de manière solidaire en rotation à un moteur (2),
- un premier embrayage (7), par lequel la bride d'embrayage (13) peut être connectée de manière solidaire en rotation au premier arbre d'entrée de boîte de vitesses (4),
- un deuxième embrayage (8), par lequel la bride d'embrayage (13) peut être connectée de manière solidaire en rotation au deuxième arbre d'entrée de boîte de vitesses (5),
- un moyeu d'embrayage (11) disposé coaxialement aux arbres d'entrée de boîte de vitesses (4, 5), lequel comprend une première unité hydraulique (27) pour l'actionnement du premier embrayage (7) et une deuxième unité hydraulique (37) pour l'actionnement du deuxième embrayage (8).
- un axe d'embrayage (25), sur lequel le moyeu d'embrayage (11) s'appuie de manière supportée à rotation, et qui est connecté hydrauliquement au moyeu d'embrayage (11), afin de conduire de l'huile depuis l'axe d'embrayage (25) vers le moyeu d'embrayage (11),
**caractérisé en ce qu'**une partie d'embrayage (16) présente, pour le transfert de couple, une portion cylindrique creuse (18) qui est disposée, vue dans la direction radiale, entre l'axe d'embrayage (25) et le moyeu d'embrayage (11) à chaque fois de manière rotative par rapport à ceux-ci, et qui présente au moins un passage à travers lequel de l'huile peut être conduite depuis l'axe d'embrayage vers le moyeu d'embrayage.

2. Double embrayage (1) selon la revendication 1, **caractérisé en ce qu'**un moteur électrique (22) est prévu, lequel vient en prise au moins en partie autour du premier et du deuxième embrayage (7, 8), vu dans la direction radiale et présente un stator de forme annulaire (23) et un rotor ou induit (21) de forme annulaire.

3. Double embrayage (1) selon la revendication 2, **caractérisé en ce que** le rotor (21) est connecté de manière solidaire en rotation à la partie d'embrayage (16).

4. Double embrayage (1) selon la revendication 3, **caractérisé en ce que** la partie d'embrayage (16) présente une portion (17) en forme de plateau, qui relie le rotor (21) à la portion (18) cylindrique creuse.

5. Double embrayage (1) selon l'une quelconque des revendications 1 à 4, **caractérisé en ce que** le moyeu d'embrayage (11) et la bride d'embrayage (13) sont connectés l'un à l'autre de manière solidaire en rotation, le moyeu d'embrayage (11) portant des disques de friction côté entrée du premier et du deuxième embrayage (7, 8).

6. Double embrayage (1) selon la revendication 5, **caractérisé en ce que** les disques de friction côté sortie du premier embrayage (7) sont connectés de manière solidaire en rotation à la partie d'embrayage (17).

7. Double embrayage (1) selon la revendication 5 ou 6, **caractérisé en ce que** des disques de friction côté sortie du deuxième embrayage (8) sont connectés par le biais d'une cloche d'embrayage (14) au deuxième arbre d'entrée de boîte de vitesses (5).

8. Double embrayage (1) selon l'une quelconque des revendications 1 à 7, **caractérisé en ce qu'**une bague (19) se raccorde à une extrémité côté moteur de la portion cylindrique creuse (18), cette bague constituant une connexion solidaire en rotation entre la partie d'embrayage (16) et le premier arbre d'entrée de boîte de vitesses (4).

9. Double embrayage (1) selon l'une quelconque des revendications 1 à 8, **caractérisé en ce que** la portion cylindrique creuse (18) est montée de manière rotative par rapport au moyeu d'embrayage (11) au moyen d'au moins un palier à roulement ou d'un palier lisse s'appliquant contre un côté extérieur de la portion cylindrique creuse (18).

10. Double embrayage (1) selon l'une quelconque des revendications 1 à 9, **caractérisé en ce que** la portion cylindrique creuse (18) est montée de manière rotative par rapport à l'axe d'embrayage (25) au moyen d'au moins un palier à roulement ou d'un palier lisse s'appliquant contre un côté intérieur de la portion cylindrique creuse.

11. Double embrayage (1) selon l'une quelconque des revendications 1 à 10, **caractérisé en ce que** la portion cylindrique creuse (18) présente un premier groupe de passages à travers lesquels de l'huile peut être conduite depuis l'axe d'embrayage (25) par le biais d'un canal (32) jusqu'à la première unité hydraulique (27).

12. Double embrayage (1) selon la revendication 11, **caractérisé en ce que** la portion cylindrique creuse (18) présente un deuxième groupe de passages à travers lesquels de l'huile peut être conduite depuis l'axe d'embrayage (25) en vue de refroidir le premier et/ou le deuxième embrayage (7, 8).

13. Double embrayage (1) selon la revendication 11 ou 12, **caractérisé en ce que** la portion cylindrique creuse (18) présente un troisième groupe de passages à travers lesquels de l'huile peut être conduite depuis l'axe d'embrayage (25) jusqu'à la deuxième unité hydraulique (37).

14. Double embrayage (1) selon l'une quelconque des revendications 1 à 13, **caractérisé en ce que** l'au moins un passage est réalisé sous la forme d'un alésage dans la portion cylindrique creuse (18), l'alésage (34) étant en liaison au niveau du côté intérieur de la portion cylindrique creuse (18) avec une rainure annulaire de l'axe d'embrayage (25), et au niveau du côté extérieur de la portion cylindrique creuse avec une rainure annulaire du moyeu d'embrayage (11).
